# EUROPÄISCHE PATENTSCHRIFT

(11) **EP 1 157 897 B1**
(45) Veröffentlichungstag und Bekanntmachung des Hinweises auf die Patenterteilung: **18.01.2006**
(21) Anmeldenummer: 01109724.3
(22) Anmeldetag: 20.04.2001
(51) Int. Cl.: B60R 19/56, B62D 21/20

(54) **Schutzrahmenanordnung für Strassenfahrzeuge**
Protection frame for road vehicles
Cadre de protection pour véhicules routiers

(30) Priorität: 22.05.2000 DE 10025003; 20.07.2000 DE 10035273
(43) Veröffentlichungstag der Anmeldung: 28.11.2001
(73) Patentinhaber: SCHIMMELPFENNIG, Karl-Heinz, 48167 MÜNSTER (DE)
(72) Erfinder: SCHIMMELPFENNIG, Karl-Heinz, 48167 MÜNSTER (DE)
(74) Vertreter: Habbel, Hans-Georg

(56) Entgegenhaltungen:
- EP-A- 0 231 761
- EP-A- 0 823 368
- EP-B- 0 638 029
- DE-A- 4 317 479

## Beschreibung

Die Erfindung bezieht sich auf eine Schutzrahmenanordnung für Straßenfahrzeuge gemäß dem Oberbegriff des Hauptanspruches.

Die z. B. aus der EP 0 638 029 B1 bekannte Schutzrahmenanordnung z. B. für LKW, Anhänger, LKW-Sattelaufleger und auch PKW weist sicherheitstechnisch deutliche Vorteile gegenüber den bisher bekannten Einrichtungen auf. Diese Schutzrahmenanordnung hat zum Vorteil, dass die strukturfesten Teile dort angesetzt werden, wo sie den Bedürfnissen der passiven Sicherheit schwächerer Verkehrsteilnehmer entsprechen, nämlich an der Außenseite des Fahrzeuges und im Hinblick auf die Kompatibilität mit schwächeren Verkehrsteilnehmern in einer vernünftigen Höhe. Für die Belange der passiven Sicherheit ist es weiterhin wünschenswert, die Außenhaut des Fahrzeuges so glatt wie möglich zu gestalten, da es dann bei schrägen Anstößen zum sogenannten "Leitplankeneffekt" kommt. Im Falle einer Kollision gleitet das schwächere Fahrzeug an der Außenkante des Schutzrahmens wie an einer Leitplanke ab, so dass es zu einer geringeren Geschwindigkeitsänderung kommt.

Der bekannte, als Schutzrahmen ausgebildete Tragrahmen ersetzt den bisher mittig angeordneten, tragenden sogenannten Leiterrahmen durch einen tragenden, hohen Fahrzeugaußenrahmen, ggf. mit Bodenabschlussplatten. Alle tragenden Rahmenelemente sind konsequent nach außen verlagert. Die luftgefederte Achse ist bei den zum Stand der Technik gehörenden Schutzrahmenanordnungen im Rahmen integriert. Da die zum Stand der Technik gehörende Schutzrahmenanordnung auch im Heck als massiver Träger ausgelegt ist, kann eine Zugmaschine nach einem Aufprall auf einen Sattelaufliegerrahmen diesen nicht mehr unterfahren, wobei zusätzlich am Heck der Schutzrahmenanordnung auch Deformationselemente vorgesehen sein können, so dass die bekannte Schutzrahmenanordnung eine Kombination von Knautschzone und Gleitzone verwirklicht.

Da bei der bekannten Anordnung die luftgefederte Achse im Rahmen integriert ist, ist ein Reifenwechsel unter dem Fahrzeug praxisfern, ebenso wie ein Reifenwechsel durch die oben und unten angeordneten Längsträger oder Horizontalstränge so gut wie unmöglich. Im Stand der Technik mussten daher im Radbereich die tragenden Rahmenstrukturen außen unterbrochen werden.

Aus der gattungsbildenden DE 43 17 479 A1 ist eine Hauptrahmenanordnung für Straßenfahrzeuge bekannt, bei welcher einige Räder des Fahrzeuges über Achsstummel innen am Hauptrahmen befestigt sind. Auch bei dieser Anordnung ist ein Reifenwechsel unter dem Fahrzeug praxisfern und auch hier musste daher im Radbereich die tragende Rahmenkonstruktion unterbrochen werden.

Aus der EP-A 650 883 ist eine Einzelradaufhängung bekanntgeworden, bei der ein Radträger vorgesehen wird, der gegenüber einem Fahrzeugrahmen durch Führungs- und Federmittel höhenbeweglich geführt ist und einen zusätzlichen Freiheitsgrad aufweist, der dem Radträger eine Schwenkbewegung in einer Fahrzeugquerebene um eine in Fahrzeuglängsrichtung verlaufende Drehachse erlaubt. Bei dieser Anordnung befinden sich die Räder mit ihrem Radträger außerhalb der Karosserie und sind über Aufhängepunkte und Gelenke außen am üblichen Leiterrahmen des Fahrzeuges angeordnet. Die Vorteile der Schutzrahmenanordnung, die in der Draufsicht die Außenabmessungen des Fahrzeuges zumindest in der Breite besitzt und dessen Horizontalstränge die Laufräder des Fahrzeuges außen umfassen, wird bei dieser bekannten Anordnung nicht verwirklicht.

Im Bereich der lenkbaren Laufräder war im Stand der Technik ebenfalls die Rahmenstruktur unterbrochen, um die Auslenkung der Räder zu ermöglichen.

Der Erfindung liegt die Aufgabe zugrunde, die zum Stand der Technik gemäß den gattungsbildenden Literaturstellen gehörenden Schutzrahmenanordnungen mit einer Anordnung auszurüsten, die im Bereich der lenkbaren Laufräder eine durchgehende, bei schrägen Anstößen einen sogenannten "Leitplankeneffekt" ermöglichende Rahmenstruktur schafft.

Diese der Erfindung zugrundeliegende Aufgabe wird durch die Lehre des Hauptanspruches oder des Anspruches 2 gelöst.

Vorteilhafte Ausgestaltungen der Erfindung sind in den Unteransprüchen erläutert.

Mit anderen Worten ausgedrückt wird gemäß der Erfindung vorgeschlagen, dass die lenkbaren Laufräder des Fahrzeuges mittels Einzelradaufhängung unter Zwischenschaltung eines sogenannten Radträgers angeordnet sind, der von dem Tragrahmen mittelbar getragen wird und gegenüber dem Tragrahmen beweglich ist, wobei dieser Radträger gekrümmt oder gekantet ausgebildet ist, und zwar gekrümmt oder gekantet in einer Horizontalebene um eine vertikale Achse, wobei die Krümmung, Wölbung oder Kantung dem Lenkradius entspricht.

Die lenkbaren Laufräder sind an einem Radträger angeordnet, der in den Tragrahmen eingepasst, aber gekrümmt oder gekantet ist, so dass nunmehr bei einer Lenkung der Räder sich auch dieser gekrümmte, d. h. gewölbte oder mehrkantige Radträger bewegt und dabei aber immer noch nach außen hin die Öffnung in der Struktur des Tragrahmens verschließt, so dass trotz gelenkter Räder im wesentlichen der Leitplankeneffekt des Tragrahmens auch in diesem Bereich beibehalten wird.

Hierbei kann eine Drehschemellenkung für die lenkbaren Laufräder, d. h. die schwenkbaren Radträger vorgesehen werden, wobei dieser Einsatz von besonderem Vorteil bei Anhängern ist, da es dann möglich ist, nicht nur den erforderlichen Lenkeinschlag zu verwirklichen, sondern sogar in der Parkstellung des Anhängers die Deichsel um 90° gedreht werden kann, wie dies häufig von Spediteuren usw. verlangt wird.

Weiterhin kann gemäß der Erfindung eine Achsschenkellenkung mit Lenkgetriebe vorgesehen sein.

Vorzugsweise führt sich der Radträger in entsprechenden Führungen im Tragrahmen.

Grundsätzlich ist darauf hinzuweisen, dass Drehschemellenkungen bei Fahrzeugen z. B. aus der DE 25 33 786 bekannt sind und z. B. wie aus der DE 43 03 208 bekannt, aus einem oberen und einem unteren Drehkranz gebildet werden können.

Auch Achsschenkellenkungen mit einem Lenkgetriebe sind z. B. aus der DE 38 20 967 A1 bekannt.

Ein Ausführungsbeispiel der Erfindung wird nachfolgend anhand der Zeichnungen erläutert. Hierbei sei ausdrücklich darauf hingewiesen, dass anstelle der dargestellten und angesprochenen, übereinander angeordneten Horizontalstränge und der vorgesehenen Vertikalstränge leitplankenähnliche, geschlossene profilierte Träger eingesetzt werden können, die lediglich im Bereich der Laufräder mit entsprechenden Radträgern ausgerüstet sind, die dann in diese durchgehenden profilierten Stränge eingepasst werden.

Um auch den gekrümmten, kantigen oder mehrkantigen Radträger, der entsprechend dem Lenkradius um eine vertikale Achse beweglich ist, ausschwenken zu können, wird gemäß einem Merkmal der Erfindung ein Anschlussgelenk vorgesehen, das im Bedarfsfall einerseits an den Radträger, andererseits an den Tragrahmen anschließbar ist, so dass dann der Radträger um eine horizontale Achse schwenkbar im Bereich der Horizontalstränge ausgebildet ist. Hierdurch wird ein einfacher Radwechsel ermöglicht, insbesondere dann, wenn der Radträger die Radnabe und das Rad derart trägt, dass die Radbefestigungsbolzen bzw. Radbefestigungsmuttern zum Inneren des Tragrahmens hin gerichtet sind.

Die Zeichnungen zeigen in
- Fig. 1: in Seitenansicht und in Draufsicht die Anordnung der schwenkbaren Radträger in Verbindung mit einem Anhänger, in
- Fig. 2: in größerem Maßstab in Ansicht und Draufsicht die Anordnung eines schwenkbaren Radträgers in Verbindung mit einer Drehschemellenkung, in
- Fig. 3: in Ansicht und Draufsicht ein vorzugsweise angetriebenes Fahrzeug mit einem Lenkgetriebe, in
- Fig. 4: einen Sattelaufleger mit drei Achsen, dessen letzte Achse als Lenkachse ausgebildet ist und in
- Fig. 5: eine abgeänderte Ausführungsform des Radträgers In Verbindung mit einem Anschlussgelenk, das am Radträger und Horizontalstrang anschließbar ist.

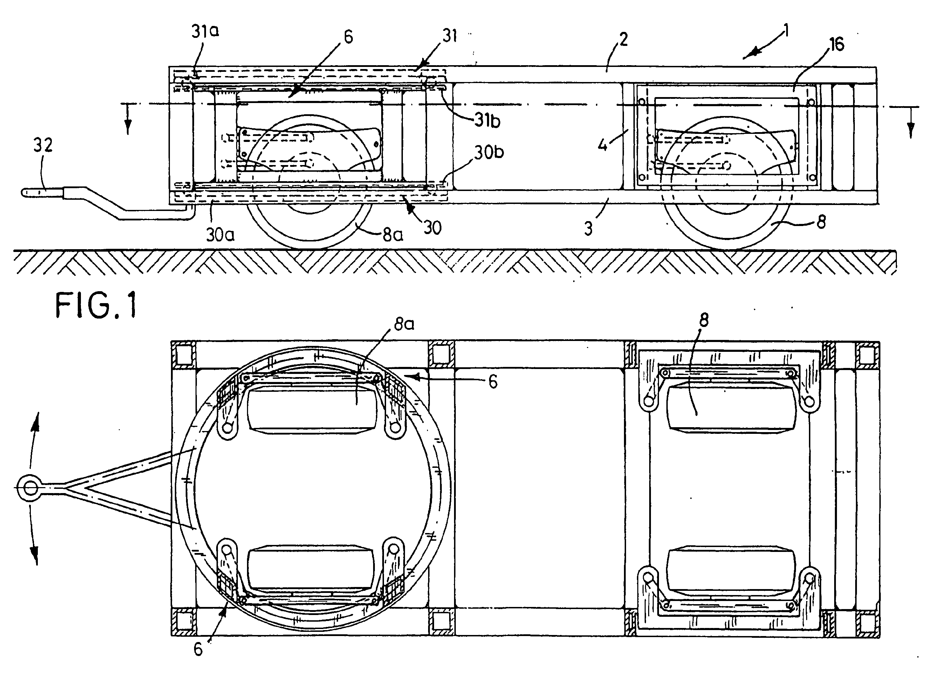

Fig. 1 zeigt einen Anhänger mit einem Tragrahmen 1, der bei dem dargestellten Ausführungsbeispiel aus Horizontalsträngen 2 und 3 sowie Vertikalsträngen 4 gebildet wird, die die Laufräder 8 und 8a des Fahrzeuges außen seitlich umfassen und den wesentlichen Teil der Strukturfestigkeit des Fahrzeuges erbringen. Die nicht lenkbaren rückwärtigen Laufräder sind mit 8 bezeichnet und an einem Radträger 16 angeordnet, der aus dem Tragrahmen herauslösbar ist, wodurch ein Radwechsel erleichtert wird. Hierzu kann der Radträger 16 schwenkbar am Tragrahmen 1 angeordnet sein.

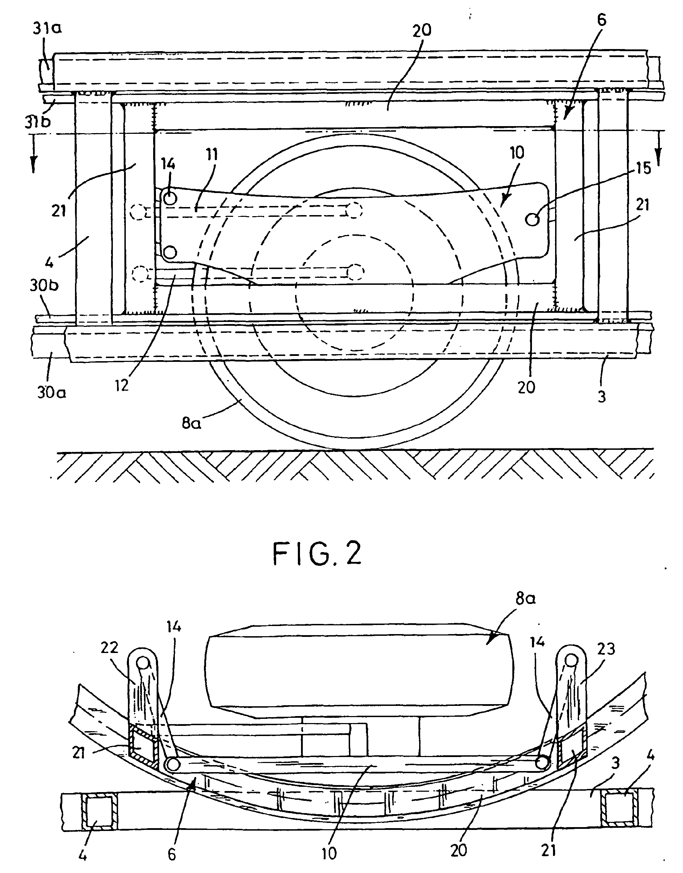

Die vorderen lenkbaren Laufräder 8a sind an einem Radträger 6 vorgesehen, der bei dem dargestellten Ausführungsbeispiel in einem oberen und einem unteren Drehkranz 30, 31 befestigt ist. Dieser Radträger 6 ist - wie dies deutlicher die Fig. 2 zeigt - gekrümmt ausgebildet, und zwar in einer Horizontalebene um eine vertikale Achse, wobei die Krümmung dem Lenkradius entspricht. Anstelle einer Krümmung des Radträgers 6 kann dieser auch entsprechend dem Lenkradius um eine vertikale Achse gekantet sein.

Die Drehkränze 30 und 31 bestehen jeweils aus einem am Horizontalstrang 2 und 3 bzw. den Vertikalsträngen 4 fest gelagerten Kranzteil, z. B. 31a oder 30a und einem von diesem drehbeweglich getragenen Kranzteil 31b bzw. 30b, wobei die beweglich gelagerten Kranzteile 31 b und 30b den eigentlichen Radträger 6 tragen.

Fig. 2 zeigt in größerem Maßstab die Anordnung des drehbeweglichen Radträgers 6, der bei dem dargestellten Ausführungsbeispiel aus den beiden Horizontalstreben 20 und den beiden Vertikalstreben 21 gebildet wird. Die Vertikalstreben 21 haben nach hinten vorspringende Stützböcke 22, 23, die dem Anschluß von Querlenkern 14 dienen, die an einem Verbindungsträger 10 anschließen der seinerseits das Rad 8a ggf. unter Zwischenschaltung z. B. einer Scheibenbremse trägt.

In Fig. 2 sind weiterhin die Längslenker 11, 12 erkennbar, die an der Vertikalstrebe 21 einerseits und an dem Verbindungsträger 10 andererseits anschließen.

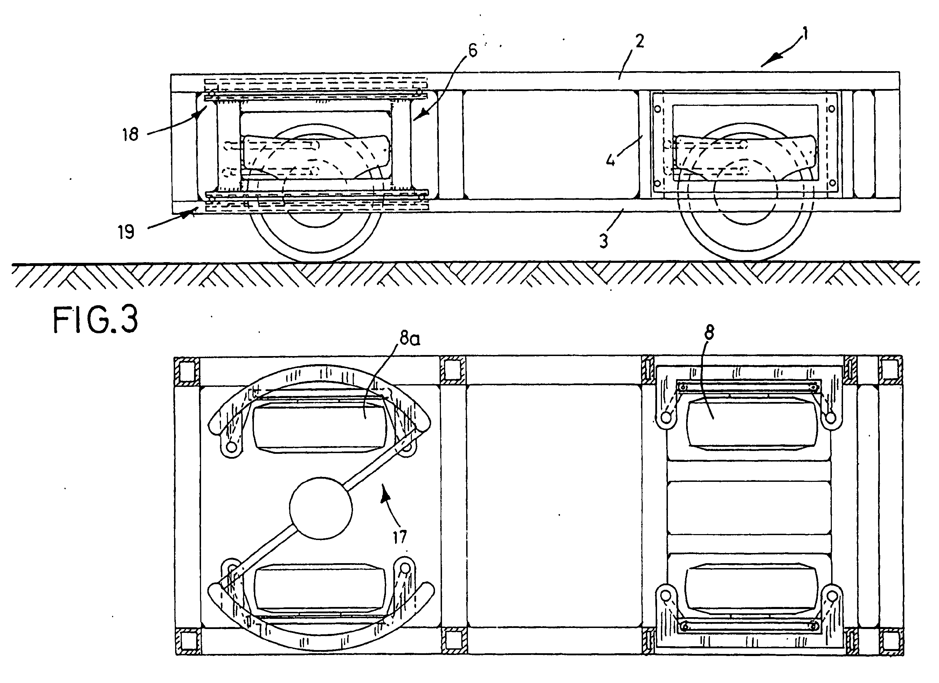

Bei der Anordnung gemäß Fig. 3 ist ein Tragrahmen 1 in Verbindung mit einem Fahrzeug dargestellt, und hier wird in der Draufsicht verdeutlicht, dass zur Lenkung der Räder 8a und damit auch der schwenkbaren Radträger 6 ein Lenkradgetriebe 17 eingesetzt wird. In diesem Fall können die Radträger 6 z. B. an einem Kugelumlaufdrehlager 18, 19 angeordnet sein.

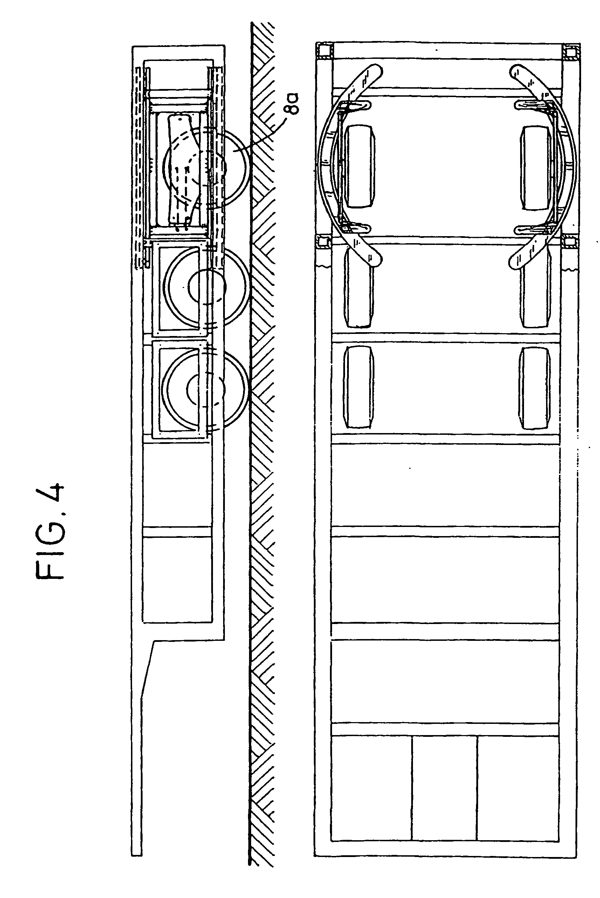

Bei der Anordnung gemäß Fig. 4 soll aufgezeigt werden, dass z. B. bei einem Sattelauflieger die Möglichkeit besteht, die in Fahrtrichtung gesehen letzten Laufräder 8a als Lenkräder auszubilden, die sich entweder selbst lenken oder zwangsgelenkt sind.

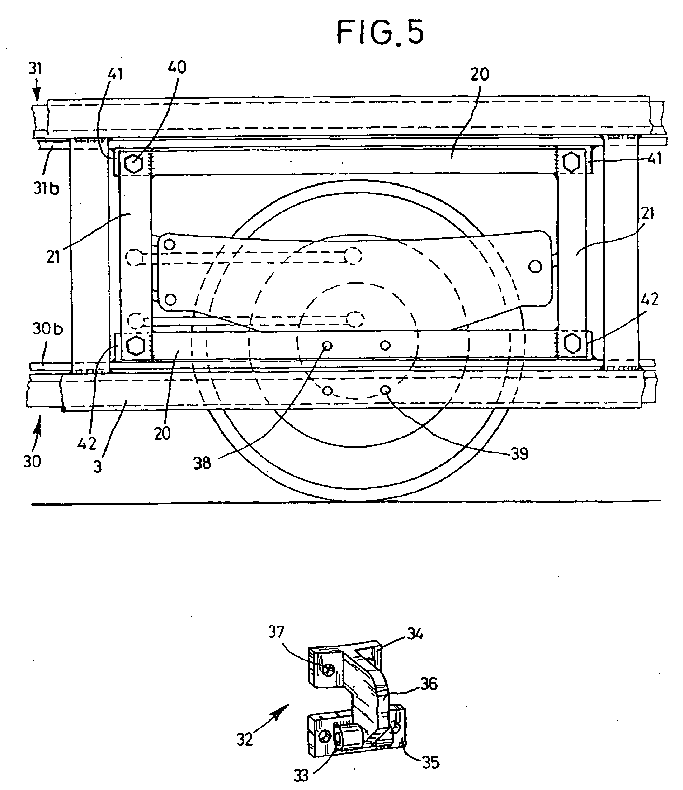

Soll zu einem Radwechsel der Radträger 6 ausgeklappt werden, besteht eine einfache Möglichkeit darin, dass ein Anschlußgelenk 32 vorgesehen wird, das also als Zusatzbauteil ausgebildet ist und das in Fig. 5 dargestellt ist. Dieses Anschlussgelenk 32 besteht einerseits aus zwei Anschlussplatten 34, 35, wobei die Anschlussplatte 34 bei dem dargestellten Ausführungsbeispiel einen Tragbügel 36 aufweist, der an ein von der Anschlussplatte 35 getragenes Gelenk 33 anschließt, so dass dadurch die Anschlussplatte 34 gegenüber der Anschlussplatte 35 schwenkbar ausgebildet ist. Die Anschlussplatten 34 und 35 weisen bei dem dargestellten Ausführungsbeispiel Bohrungen 37 für Befestigungsbolzen auf.

In der unteren Horizontatstrebe 20 des Radträgers 6 sind ebenfalls Bohrungen 38 vorgesehen, die so angeordnet sind, dass sie mit den Bohrungen 37 der Anschlussplatte 34 fluchten können, und in dem unteren Horizontalstrang 3 des Tragrahmens 1 sind Bohrungen 39 vorgesehen, die so angeordnet sind, dass sie mit den Bohrungen 37 der Anschlussplatte 35 fluchten können. Hierdurch ist im Bedarfsfall ein Anschluß des Anschlussgelenkes 32 an den Radträger 6 einerseits und den Tragrahmen 1 andererseits möglich, so dass dann nach Lösen von Befestigungsschrauben 40 der Radträger 6 ausklappbar ist.

Bei dem in Fig. 5 dargestellten Ausführungsbeispiel ist der Radträger 6 über die Befestigungsschrauben 40 an aus der Zeichnung erkennbaren Laschen 41 und 42 angeschraubt, wobei die Laschen 41 vom drehbeweglichen Kranzteil 31b und die Laschen 42 vom drehbeweglichen Kranzteil 30b des oberen Drehkranzes 31 bzw. des unteren Drehkranzes 30 getragen werden. Die Horizontalstreben 20 und die Vertikalstreben 21 des Radträgers 6 sind fest miteinander verbunden und bilden eine Einheit, und diese Einheit kann dann durch Lösen der Befestigungsschrauben 40 von den Laschen 41 und 42 gelöst werden, und nachdem das Anschlussgelenk 32 angeschlossen ist, kann der Radträger 6 nach außen geklappt werden.

Nach Lösen des Radträgers 6 kann dann ein Ausklappen des Radträgers 6 erfolgen, so dass der Reifen in einfachster Weise gewechselt werden kann, da, wie auf einem Tisch liegend, nunmehr die Befestigungsbolzen bzw. Radbefestigungsmuttern von oben her zugänglich sind.

Anstelle der in Fig. 5 dargestellten Ausführungsform, bei der sowohl am Radträger 6 wie am Tragrahmen 1 als auch an den Anschlussplatten 34 und 35 des Anschlussgelenkes 32 Bohrungen 37, 38, 39 vorgesehen sind, können natürlich auch am Radträger 6 bzw. am Tragrahmen 1 Bolzen vorgesehen sein, die durch entsprechende Bohrungen des Anschlussgelenkes greifen oder umgekehrt.

Wesentlich ist bei der Ausführungsform gemäß Fig. 5, dass für alle am Fahrzeug vorgesehenen Radträger 6 nur ein einziges Anschlussgelenk 32 erforderlich ist, um den Radwechsel vorzunehmen.

Anstelle der vorauf erläuterten Drehkränze bzw. Kugelumlaufdrehlager können auch andere, die Radträger 6 beweglich tragenden Teile eingesetzt werden, wenn sichergestellt ist, dass der Radträger 6 für die lenkbaren Laufräder 8a in einer Horizontalebene um eine vertikale Achse geschwenkt werden kann.

## Patentansprüche

1. Schutzrahmenanordnung als Tragrahmen (1) für Straßenfahrzeuge, der in der Draufsicht die Außenabmessungen des Fahrzeuges zumindest in der Breite besitzt und dessen Horizontalstränge (2, 3) die Laufräder (8) des Fahrzeuges außen seitlich umfassen und einen wesentlichen Teil der Strukturfestigkeit des Fahrzeuges erbringen, wobei Laufräder (8) des Fahrzeuges mittels Einzelradaufhängung am Tragrahmen (1) angeordnet sind, **dadurch gekennzeichnet, daß** die lenkbaren Laufräder (8a) des Fahrzeuges mittels Einzelradaufhängung an je einem Radträger (6) angeordnet sind, der entsprechend dem Lenkradius in einer Horizontalebene um eine vertikale Achse gekrümmt ausgebildet ist

2. Schutzrahmenanordnung als Tragrahmen (1) für Straßenfahrzeuge, der in der Draufsicht die Außenabmessungen des Fahrzeuges zumindest in der Breite besitzt und dessen Horizontalstränge (2, 3) die Laufräder (8) des Fahrzeuges außen seitlich umfassen und einen wesentlichen Teil der Strukturfestigkeit des Fahrzeuges erbringen, wobei Laufräder (8) des Fahrzeuges mittels Einzelradaufhängung am Tragrahmen (1) angeordnet sind, **dadurch gekennzeichnet, daß** die lenkbaren Laufräder (8a) des Fahrzeuges mittels Einzelradaufhängung an je einem Radträger (6) angeordnet sind, der entsprechend dem Lenkradius in einer Horizontalebene um eine vertikale Achse gekantet ausgebildet ist

3. Schutzrahmenanordnung nach Anspruch 1 oder 2, **dadurch gekennzeichnet, daß** der Radträger (6) in entsprechenden Führungen am Tragrahmen (1) angeordnet ist.

4. Schutzrahmenanordnung nach einem der vorhergehenden Ansprüche, **dadurch gekennzeichnet, daß** zwei gegenüberliegende Radträger (6) von einem oberen und unteren Drehkranz (30, 31) getragen sind, die am Tragrahmen (1) angeordnet sind.

5. Schutzrahmenanordnung nach einem der vorhergehenden Ansprüche 1 bis 3, **gekennzeichnet durch** eine Achsschenkellenkung mit einem Lenkgetriebe (17).

6. Schutzrahmenanordnung nach einem der vorhergehenden Ansprüche, **dadurch gekennzeichnet, dass** der Radträger (6) zusätzlich um eine horizontale Achse schwenkbar im Bereich der Horizontalstränge (2, 3) am Tragrahmen (1) angeordnet ist.

7. Schutzrahmenanordnung nach Anspruch 6, **gekennzeichnet durch** ein Anschlussgelenk (32), das im Bedarfsfall zwischen Radträger (6) und dem unteren Horizontalstrang (3) einsetzbar ist.

8. Schutzrahmenanordnung nach einem der vorhergehenden Ansprüche, **dadurch gekennzeichnet, dass** der Radträger (6) die Radnabe und das Rad (8a) derart trägt, dass die Radbefestigungsbolzen bzw. Radbefestigungsmuttern zum Inneren des Tragrahmens (1) hin gerichtet sind.

9. Schutzrahmenanordnung nach einem der vorhergehenden Ansprüche, **dadurch gekennzeichnet, dass** der Radträger (6) Längslenker (11, 12) trägt.

10. Schutzrahmenanordnung nach einem der vorhergehenden Ansprüche, **dadurch gekennzeichnet, daß** der Radträger (6) Querlenker (14, 15) trägt.

11. Schutzrahmenanordnung nach einem der vorhergehenden Ansprüche, **dadurch gekennzeichnet, daß** der Radträger (6) mit Stoßdämpfern ausgerüstet ist.

## Claims

1. Protection frame as a support frame (1) for road vehicles, which protection frame, viewed from above, possesses at least in its width the outside dimensions of the vehicle and the horizontal structural members (2,3) of which contain the wheels (8) of the vehicle on the outer side and provide a substantial part of the structural strength of the vehicle, where wheels (8) of the vehicle are arranged on the support frame (1) by means of independent suspension, **characterised in that** each of the steerable wheels (8a) of the vehicle is arranged on a wheel bearer (6) which according to steering radius is constructed in a curve around a vertical axis and in a horizontal plane.

2. Protection frame as a support frame (1) for road vehicles, which protection frame, viewed from above, possesses at least in its width the outside dimensions of the vehicle and the horizontal structural members (2,3) of which contain the wheels (8) of the vehicle on the outer side and provide a substantial part of the structural strength of the vehicle, where wheels (8) of the vehicle are arranged on the support frame (1) by means of independent suspension, **characterised in that** each of the steerable wheels (8a) of the vehicle is arranged on a wheel bearer (6) which according to steering radius is constructed at angles around a vertical axis and in a horizontal plane.

3. Protection frame arrangement in accordance with claim 1 or 2, **characterised in that** the wheel bearer (6) is arranged in appropriate guides on the support frame (1).

4. Protection frame arrangement in accordance with any of the foregoing claims, **characterised in that** two opposing wheel bearers (6) are supported by an upper and a lower rotating assembly (30, 31) arranged on the support frame (1).

5. Protection frame arrangement in accordance with any of the foregoing claims 1 to 3, **characterised by** an axle pivot steering means with a steering gear (17).

6. Protection frame arrangement in accordance with any of the foregoing claims, **characterised in that** the wheel bearer (6) is additionally arranged so as to be able to pivot about a horizontal axis in the area of the horizontal structural members (2, 3) on the support frame (1).

7. Protection frame arrangement in accordance with claim 6, **characterised by** an articulated connecting means (32) which, if required, may be disposed between the wheel bearer (6) and the lower horizontal structural member (3).

8. Protection frame arrangement in accordance with any of the foregoing claims, **characterised in that** the wheel bearer (6) supports the wheel hub and the wheel (8a) in such a way that the wheel fastening bolts or wheel fastening nuts point towards the inside of the support frame (1).

9. Protection frame arrangement in accordance with any of the foregoing claims, **characterised in that** the wheel bearer (6) supports longitudinal steering elements (11, 12).

10. Protection frame arrangement in accordance with any of the foregoing claims, **characterised in that** the wheel bearer (6) supports transverse steering elements (14, 15).

11. Protection frame arrangement in accordance with any of the foregoing claims, **characterised in that** the wheel bearer (6) is fitted with shock absorbers.

## Revendications

1. Cadre de protection sous forme de cadre porteur (1) pour véhicules routiers, qui a, selon la vue de dessus, les dimensions extérieures du véhicule au moins dans la largeur et dont les barres horizontales (2, 3) entourent latéralement les roues mobiles (8) du véhicules à l'extérieur et participent dans une proportion sensible à la stabilité structurale du véhicule, les roues mobiles (8) du véhicule étant montées sur le cadre porteur (1) à l'aide de suspensions de roues individuelles, **caractérisé en ce que** les roues mobiles orientales (8a) du véhicule sont montées sur un support de roue (6) à l'aide de suspensions de roues individuelles, lequel support de roue a une configuration incurvée autour d'un axe vertical dans un plan horizontal adaptée au rayon d'orientation.

2. Cadre de protection sous forme de cadre porteur (1) pour véhicules routiers, qui a, selon la vue de dessus, les dimensions extérieures du véhicule au moins dans la largeur et dont les barres horizontales (2, 3) entourent latéralement les roues mobiles (8) du véhicules à l'extérieur et participent dans une proportion sensible à la stabilité structurale du véhicule, les roues mobile (8) du véhicule étant montées sur le cadre porteur (1) à l'aide de suspensions de roues individuelles, **caractérisé en ce que** les roues mobiles orientables (8a) du véhicule sont montées sur un support de roue (6) à l'aide de suspensions de roues individuelles, lequel support de roue a une configuration sur chant autour d'un axé vertical dans un plan horizontal adaptée au rayon d'orientation.

3. Cadre de protection selon la revendication 1 ou 2, **caractérisé en ce que** le support de roue (6) est disposé dans des dispositifs de guidage appropriés dans le cadre porteur (1).

4. Cadre de protection selon l'une quelconque des revendications précédentes, **caractérisé en ce que** deux supports de roue opposés (6) sont portés par une couronne pivotante supérieure et une couronne pivotante inférieure (30, 31) qui sont montées sur le cadre porteur (1).

5. Cadre de protection selon l'une quelconque des revendications précédentes 1 à 3, **caractérisé par** une commande de fusée d'essieu avec un boîtier de direction (17).

6. Cadre de protection selon l'une quelconque des revendications précédentes, **caractérisé en ce que** le support de roue (6) est disposé, en plus, de manière à pivoter autour d'un axe horizontal dans la zone des barres horizontales (2, 3) sur le cadre porteur (1).

7. Cadre de protection selon la revendication 6, **caractérisé par** une articulation de liaison (32) qui peut être insérée en cas de besoin entre le support de roue (6) et la barre horizontale inférieure (3).

8. Cadre de protection selon l'une quelconque des revendications précédentes, **caractérisé en ce que** le support de roue (6) porte le moyeu de roue et la roue (8a) de telle manière que les boulons de fixation de la roue ou les écrous de fixation de la roue sont orientés vers l'intérieur du cadre porteur (1).

9. Cadre de protection selon l'une quelconque des revendications précédentes, **caractérisé en ce que** le support de roue (6) porte des bras oscillants longitudinaux (11, 12).

10. Cadre de protection selon l'une quelconque des revendications précédentes, **caractérisé en ce que** le support de roue (6) porte des bras oscillants transversaux (14, 15).

11. Cadre de protection selon l'une quelconque des revendications précédentes, **caractérisé en ce que** le support de roue (6) est équipé d'amortisseurs.
